# DEMANDE DE BREVET EUROPEEN

(11) **EP 0 626 489 A1**
(43) Date de publication de la demande: **30.11.1994**
(21) Numéro de dépôt: 94400883.8
(22) Date de dépôt: 25.04.1994
(51) Int. Cl.: E04F 21/16, B05C 17/005, A21C 9/04

(54) **Dispositif et procédé de remplissage de joints, fissures, percements ou autres**

(30) Priorité: 26.04.1993 FR 9304890
(71) Demandeur: Delisle, Erick, F-76480 Jumieges (FR)
(72) Inventeur: Delisle, Erick, F-76480 Jumieges (FR)
(74) Mandataire: Flavenot, Bernard

(57) **Abrégé**

L'invention concerne un dispositif et un procédé de remplissage de joints permettant d'effectuer en une seule opération et sans laisser de salissures l'application de mortier de ciment de consistance appropriée, directement entre les briques ou autres matériaux à combler, en quantité suffisante en fonction de la profondeur de joint désirée et en même temps de le lisser si besoin.

Le dispositif de remplissage de joints comporte une partie supérieure (1) en matière souple ayant de préférence la forme d'un cône et une partie inférieure rigide dite "embout" (3) en forme d'entonnoir permettant l'introduction du mortier de ciment directement à l'intérieur de l'endroit à combler, par simple pression sur la partie supérieure (1), ledit embout (3) pouvant être équipé d'un tube d'injection (6) ou de tout autre dispositif complémentaire tel que palette à lisser de forme appropriée ou autre.

Les dispositif et procédé de remplissage selon l'invention sont destinés à l'exécution en une seule opération, de joints, rebouchages divers, notamment dans la maçonnerie.

## Description

La présente invention concerne un dispositif et un procédé de remplissage de joints, fissures, percements ou autres, notamment dans la maçonnerie.

La mise en oeuvre de certains matériaux de construction tels que les briques, parpaings, carrelages, etc... nécessite la réalisation de joints pour les fixer entre-eux.

Dans la pratique courante, l'exécution de tels joints se fait manuellement au moyen de mortier de ciment déposé dans lesdits joints à l'aide d'une truelle, puis tassé et lissé au moyen d'un fer à joints.

Cette façon habituelle de procéder représente un travail long et fastidieux. De plus, le mortier employé est souvent répandu sur les matériaux à jointoyer, nécessitant un nettoyage et laissant quelquefois des traces indélibiles.

Une autre façon de procéder pour l'exécution des joints consiste en l'emploi de machines sous pression, propulsant le mortier à l'intérieur desdits joints. Ces machines sont lourdes et coûteuses et ne peuvent être employées que pour des chantiers d'une certaine importance. Elles ne solutionnent pas le problème des petits chantiers, ni celui des bricoleurs.

On connait aussi des appareils comportant un piston, fontionnant selon le principe de la seringue.

Le mortier de ciment étant un matériau lourd, l'emploi de ces appareils n'est pas toujours très aisé et nécessite de plus un entretien spécifique en raison du sable et de l'agressivité du ciment qui risquent, lorsque la prise dudit mortier se produit dans l'appareil, de bloquer le système de fonctionnement dudit appareil.

Pour remédier à ces inconvénients, la présente invention concerne un dispositif et un procédé de remplissage de joints permettant d'effectuer en une seule opération et sans laisser de salissures, l'application de mortier de ciment de consistance appropriée, directement entre les briques ou autres matériaux à combler, en quantité suffisante en fonction de la profondeur de joint désirée et en même temps de le lisser.

Le dispositif de remplissage de joints comporte une partie supérieure en matière souple, ayant de préférence la forme d'un cône et formant une "poche" et une partie inférieure rigide dite "embout" en forme d'entonnoir, permettant l'introduction du mortier de ciment directement à l'intérieur des joints, fissures ou autre à combler.

L'embout est fixé d'une manière définitive sur la partie supérieure souple par soudure, encollage ou tout autre moyen étanche.

Selon la nature du remplissage à effectuer, l'embout peut être muni d'un tube d'injection et éventuellement d'une palette à lisser, ces accessoires pouvant être fixés par vissage, par système à baillonnette ou autre, soit à l'intérieur soit à l'extérieur dudit embout.

Le procédé de remplissage de joints consiste à introduire le mortier de ciment de consistance appropriée, contenu dans le dispositif, directement à l'intérieur des joints ou autre à combler, par simple pression sur la partie souple dudit dispositif, sans qu'il soit nécessaire d'aucune autre manipulation.

L'invention sera mieux comprise à la lecture de la description faite en référence aux dessins joints sur lesquels :
- la figure 1 représente le dispositif de remplissage de joints muni d'un tube d'injection,
- la figure 2 représente le dispositif de remplissage contenant le mortier de ciment,
- la figure 3 représente un embout muni d'un tube d'injection fixé extérieurement au moyen d'un pas-de-vis,
- la figure 4 représente un tube d'injection fixé au moyen d'un système à baillonnette,
- la figure 5 représente un embout muni d'une palette de lissage,
- la figure 6 représente un embout muni d'un dispositif de lissage en forme d'U.

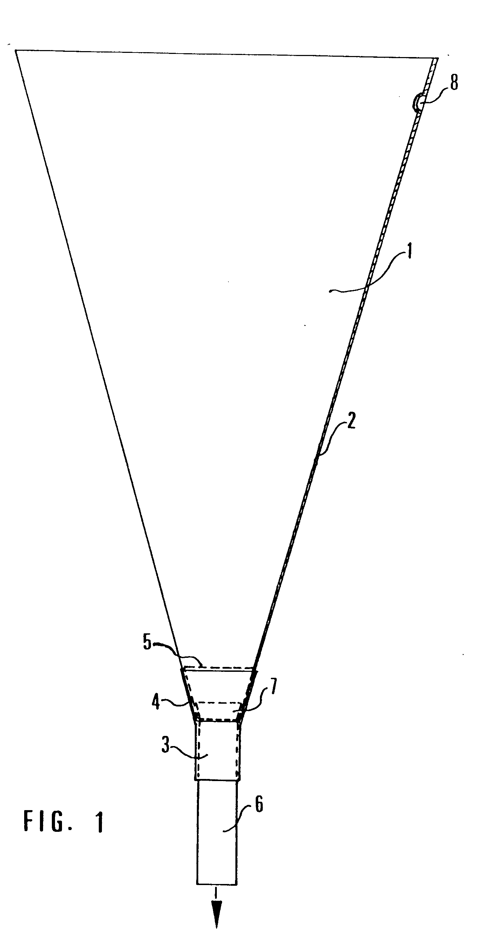

Le dispositif de remplissage de joints représenté sur la figure 1 comporte une partie supérieure (1) en matière souple en forme de cône refermé au moyen d'une soudure (2), et une partie inférieure rigide dite "embout" (3), ledit embout (3) étant lui-même composé d'une partie extérieure (4) en forme d'entonnoir, permettant l'introduction du mortier de ciment directement dans les joints, et d'une partie intérieure (5) cônique, venant s'appliquer juste à l'intérieure de la partie supérieure (1) dudit dispositif de remplissage, lesdites parties (4) et (5) de l'embout (3) étant fixées définitivement sur la partie supérieure (1) souple par soudure, encollage ou tout autre moyen étanche; un tube d'injection (6) muni d'un collet (7), est posé à l'intérieur dudit dispositif de remplissage de façon étanche et permet l'introduction du mortier de ciment dans les interstices plus profondes.

Un oeuillet (8) situé dans le haut de la partie supérieure (1) permet l'accrochage dudit dispositif de remplissage, notamment lors du nettoyage de celui-ci après usage.

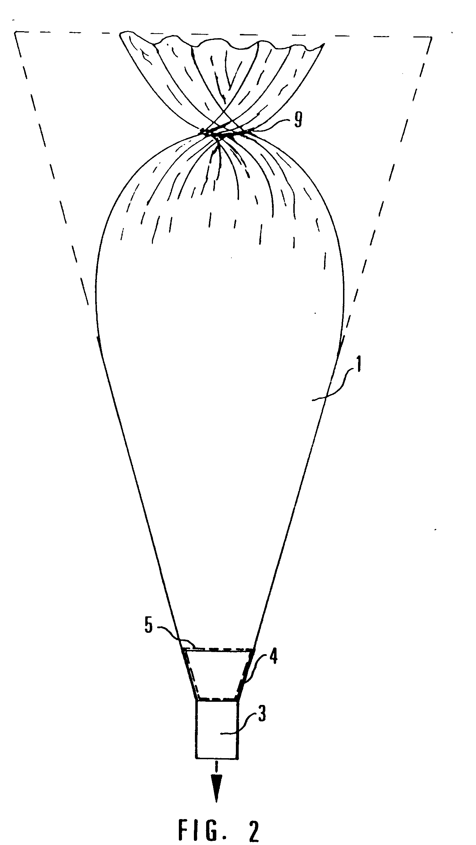

Sur la figure 2 la partie supérieure (1) du dispositif de remplissage de joints, est représentée remplie de mortier de ciment, en position fermée après avoir serré la partie supérieure restée vide et fait un quart de tour (9).

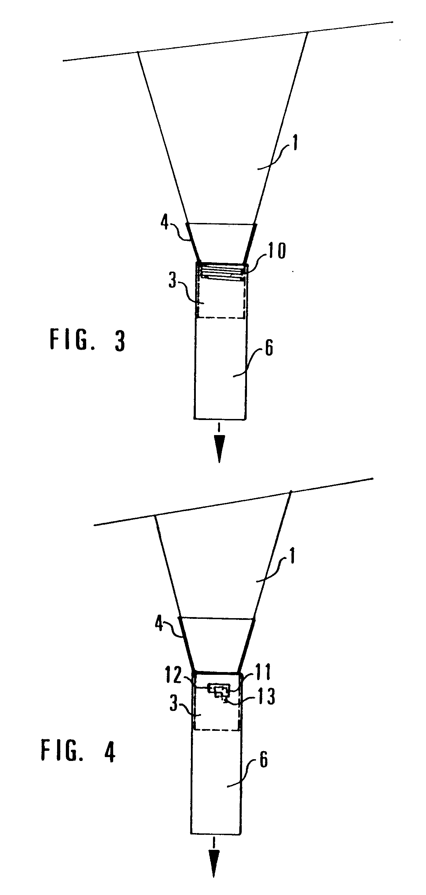

Le tube d'injection (6) représenté sur la figure 3 est fixé sur l'embout (3) au moyen d'un pas-de-vis (10) à l'extérieur dudit embout (3).

Sur la figure 4, le tube d'injection (6) est fixé à l'extérieur de l'embout (3) au moyen d'un système à baillonnette (11) comportant une lumière (12) et un crochet (13) situés respectivement sur ledit tube d'injection (6) d'une part, et sur la partie extérieure (4) dudit embout (3) d'autre part.

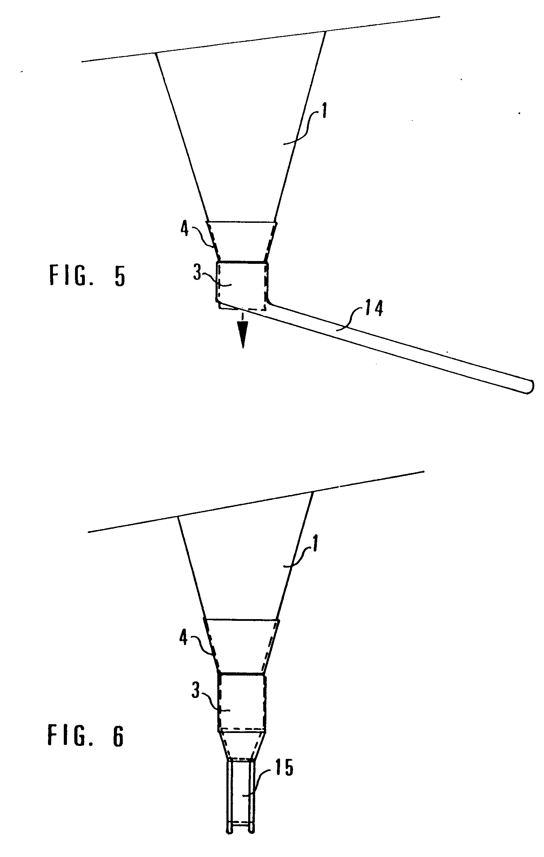

La figure 5 représente en coupe une palette de lissage (14) fixée extérieurement sur l'embout (3) du dispositif de remplissage de joints.

Selon la forme à donner aux joints, des palettes de lissage différentes pourront être adaptées sur l'embout (3) du dispositif de remplissage, à titre d'exemple la figure 6 représente, vue de face, une palette de lissage en forme d'U (15).

Le dispositif de remplissage de joints, fissures, percements ou autres comprend donc une partie supérieure (1) en matière souple ayant de préférence la forme d'un cône refermé au moyen d'une soudure (2), et une partie inférieure rigide dite "embout" (3), lui-même formé d'une partie extérieure (4) en forme d'entonnoir et d'une partie intérieure (5) en forme de cône, les deux parties (4) et (5) dudit embout (3) étant définitivement fixées de part et d'autre au bas de la partie souple par soudure, encollage ou tout autre moyen étanche.

Le mortier de ciment est introduit dans les joints au moyen de l'embout (3).

Un tube d'injection (6) muni d'un collet (7), posé à l,intérieur du dispositif de remplissage de joints, permet l'introduction du mortier dans des parties plus profondes à combler.

Le mortier de ciment de consistance appropriée est introduit dans la partie supérieure (1) du dispositif de remplissage, le haut de ladite partie supérieure (1) est alors serré et tourné d'un quart de tour (9) pour fermer.

Le mortier de ciment est introduit dans les joints au moyen de l'embout (3) par simple pression sur la partie supérieure (1) du dispositif de remplissage.

Les différents tubes d'injection (6), palettes de lissage (14) et (15) peuvent être fixés sur l'embout (3) soit à l'intérieur comme représenté sur la figure 1, soit à l'extérieur comme représenté sur les figures 3, 4, 5 et 6, au moyen soit d'un pas-de-vis (10), soit d'un système à baillonnette (11) comportant une lumière (12) et un crochet (13), tels que représentés sur les figures 3 et 4, ou de tout autre moyen.

Selon la forme de joint désirée, le mortier peut être lissé au moyen d'une palette (14) faisant office de fer à lisser, ou d'une palette en forme d'U (15) par exemple, ces formes n'étant pas limitées.

Le procédé de remplissage de joints, fissures, percements ou autres consiste donc à introduire un mortier de ciment de consistance appropriée, dans les parties à combler au moyen de l'embout (3) du dispositif de remplissage de joints, par simple pression sur la partie supérieure (1) en matière souple, après que celle-ci aît été préalablement remplie dudit mortier de ciment.

Les mortiers de ciment/sable habituellement mis en oeuvre au moyen d'une truelle n'ont pas une consistance adéquate à l'usage du dispositif de remplissage selon l'invention.

Le mortier de ciment employé est composé d'un mélange de ciment, et de chaux additionné de sable suffisamment fin, en quantités et proportions appropriées, ledit mélange est alors dilué dans un volume d'eau comportant l'adjonction d'un liant permettant l'obtention d'un mortier de consistance pateuse et homogène, suffisamment fluide pour pénétrer dans les interstices à combler.

Ledit mortier de ciment ainsi obtenu ne devra pas adhérer au parois du dispositif de remplissage de joints dont la partie supérieure (1) sera de préférence une toile enduite d'un revêtement anti-acide. La mise en oeuvre dudit mortier au moyen du dispositif de remplissage de joints selon l'invention se fait par simple pression sur la partie supérieure (1) en matière souple, permettant de réguler le débit en fonction des quantités nécessaires et en déplaçant l'embout (3) ou le tube d'injection (6) le long des parties à traiter au fur et à mesure du remplissage.

Selon l'aspect désiré, les joints pourront rester tels quels, ou bien être lissés ou brossés.

L'adjonction d'un liant au mortier de ciment a pour effet d'en retarder la prise et d'obtenir après malaxation, une consistance suffisamment pateuse et homogène permettant l'injection au fond des parties à traiter sans obligation d'intervention manuelle pour tasser et lisser ensuite sauf en cas de recherche d'un aspect particulier.

La présente invention est destinée plus particulièrement aux entreprises de petite et moyenne importance ainsi qu'aux artisans et aux particuliers pour l'exécution de tous joints, rebouchages de fissures percements et autres.

L'emploi du dispositif de remplissageselon l'invention et du mortier approprié offre l'avantage d'un important gain de temps d'environ 30% sur une mise en oeuvre traditionnelle à la truelle et au fer à lisser.

De plus, le mortier étant directement déposé dans le joint ou autre endroit à combler, il n'y a plus de mortier répandu sur les matériaux à relier (briques, parpaings, carrelages ou autres), il n'y a plus de nettoyage à effectuer après la mise en oeuvre.

## Revendications

**1 -** Dispositif de remplissage de joints, fissures, percements ou autres, notamment dans la maçonnerie caractérisé en ce qu'il comporte une partie supérieure (1) en matière souple ayant la forme d'un cône refermé au moyen d'une soudure (2) et formant une "poche" et une partie inférieure rigide dite "embout" (3), ledit embout (3) étant lui-même composé d'une partie extérieure (4) en forme d'entonnoir permettant l'introduction du mortier de ciment directement dans les joints et d'une partie intérieure (5) cônique, venant s'appliquer juste à l'intérieur de la partie supérieure (1) dudit dispositif de remplissage, lesdites parties (4) et (5) de l'embout (3) étant fixées définitivement sur la partie supérieure (1) par soudure, encollage ou tout autre moyen étanche, un tube d'injection (6) permettant l'introduction du mortier de ciment dans les interstices plus profondes, pouvant être fixé soit à l'intérieur, soit à l'extérieur dudit embout (3).

**2 -** Dispositif de remplissage de joints ou autres selon la revendication 1 caractérisé en ce que l'embout (3) comporte un moyen de fixation soit par pas-de-vis (10), soit par un système à baillonnette (11) comportant une lumière (12) et un crochet (13) situés respectivement sur ledit embout (3) d'une part, et sur la pièce à fixer d'autre part, la pièce à fixer pouvant être soit un tube d'injection (6), soit une palette de lissage (14) faisant office de fer à lisser, ou en forme d'U (15), les formes desdites palettes de lissage n'étant par limitées.

**3 -** Dispositif de remplissage de joints ou autres selon la revendication 1 et 2 caractérisé en ce qu'il comporte un oeuillet (8) situé dans le haut de la partie supérieure (1) permettant l'accrochage dudit dispositif de remplissage, notamment lors du nettoyage de celui-ci après usage.

**4 -** Procédé de remplissage de joints, fissures, percements ou autres au moyen du dispositif de remplissage selon les revendications 1 à 3, caractérisé en ce qu'il consiste à introduire le mortier de ciment de consistance appropriée contenu dans ledit dispositif de remplissage, directement à l'intérieure des joints ou autres à combler, par simple pression sur la partie supérieure (1) en matière souple dudit dispositif, sans aucune autre manipulation au moyen de l'embout (3) ou du tube à injection (6).

**5 -** Procédé de remplissage de joints ou autres selon la revendication 4 caractérisé en ce que le mortier de ciment employé est composé d'un mélange de ciment et de chaux additionné de sable suffisamment fin, en quantités et proportions appropriées, ledit mélange étant alors dilué dans l'eau comportant l'adjonction d'un liant permettant l'obtention d'un mortier de consistance pateuse et homogène suffisamment fluide pour pénétrer dans les interstices à combler, ledit liant ayant pour effet de retarder la prise du mortier ainsi obtenu et d'empêcher son adhérence sur les parois de la partie supérieure (1) du dispositif de remplissage.

**6 -** Procédé de remplissage de joints ou autres selon les revendications 4 et 5 caractérisé en ce l'application du mortier de ciment obtenu selon la revendication 5 au moyen du dispositif de remplissage de joints selon les revendications 1 à 3, permet l'injection au fond des parties à traiter sans obligation d'intervention manuelle pour tasser et lisser ensuite, sauf en cas de recherche d'un aspect particulier.

**7 -** Dispositif de remplissage de joints ou autres selon les revendications 1 à 3 caractérisé en ce le tube d'injection (6) peut être fixé intérieurement au moyen d'un collet (7) de façon étanche.

**8 -** Dispositif de remplissage de joints ou autres selonles revendications 1 à 3 caractérisé en ce que la partie supérieure (1) en matière souple est une toile enduite d'un revêtement anti-acide, lors de la mise en oeuvre du mortier de ciment, le haut de ladite partie supérieure (1) étant serré et tourné d'un quart de tour pour fermer, ledit mortier étant extrait dudit dispositif de remplissage par simple pression sur ladite partie supérieure (1).
